# EUROPEAN PATENT SPECIFICATION

(11) **EP 3 007 018 B1**
(45) Date of publication and mention of the grant of the patent: **14.09.2022**
(21) Application number: 15166383.8
(22) Date of filing: 05.05.2015
(51) Int. Cl.: G05B 19/042, G05B 19/409

(54) **CONTROLLER FOR AN AIR CONDITIONING APPARATUS**
STEUERUNG FÜR EINE KLIMAANLAGENVORRICHTUNG
CONTRÔLEUR POUR UN APPAREIL DE CONDITIONNEMENT D'AIR

(30) Priority: 08.10.2014 KR 20140135771
(43) Date of publication of application: 13.04.2016
(73) Proprietor: LG Electronics Inc., Yeongdeungpo-gu Seoul 150-721 (KR)
(72) Inventor: Kim, Seontaek, 153-802 Seoul (KR); Lee, Kyooho, 153-802 Seoul (KR); Lee, Donggeun, 153-802 Seoul (KR)
(74) Representative: Vossius & Partner Patentanwälte Rechtsanwälte mbB

(56) References cited:
- EP-A1- 2 309 200
- EP-A1- 2 730 852
- US-A1- 2010 083 110

## Description

In general, controllers are devices for controlling home appliances such as a TV, an audio or video device, an air conditioner, a wire broadcast converter, a satellite broadcast converter, a fan and the like. In some cases, the controllers may remotely control various home appliances through wired communication or wireless transmission of a control frequency signal. The controllers may be devices dedicated to specific home appliances or may be computers in which software for controlling specific home appliances is installed.

A controller may be applied to an air conditioner. In the case of a multi-air-conditioner typically used in a large building that requires a plurality of indoor units, the indoor units are connected to a single outdoor unit, and the indoor units are installed in indoor areas respectively so that the effect of installing a plurality of air conditioners may be achieved.

Korean Patent Application Laid-open Publication No. 2014-0061581 (published on May 22, 2014) that is a prior art document discloses a controller for an air conditioner.

The prior art document discloses a controller for an air conditioner which enables a user to easily check cycle information on the air conditioner on the basis of data received from the air conditioner, and displays a cycle view so that the user may easily detect and treat a state of the air conditioner.

However, in the case of a conventional controller for an air conditioner, a user should input product information of the air conditioner to the controller so that the controller may display, on a screen, information corresponding to the product information of the air conditioner. Therefore, the user may experience inconvenience.

Furthermore, in the case of inputting the product information of the air conditioner manually, the controller may erroneously display the product information of the air conditioner or may be unable to display the product information of the air conditioner if the user erroneously inputs the product information of the air conditioner.

Moreover, in the case where the product information is changed, such as in the case of replacing the air conditioner, the user should input the product information of a new air conditioner.

In addition, in the case of the conventional controller, screens for respective air conditioners are individually designed and stored. Therefore, if a communication connection to a first-type air conditioner is released and then a communication connection to a second-type air conditioner is established, a screen corresponding to the second-type air conditioner should be displayed after a program for displaying a screen corresponding to the first-type air conditioner is terminated. Therefore, the cost of generating a program is high, and it takes a long time to display a screen.

EP 2 730 852 A1 relates to an apparatus for controlling an air conditioner including a control unit which enables access to the air conditioner, and determine and control an operation state thereof visually.

EP 2 309 200 A1 relates to a group managing parities managing, as a plurality of groups numerous installation devices installed in a plurality of buildings.

An object of the present invention is to provide a controller for an air conditioner and a method for controlling an air conditioner.

The object of the present invention is achieved by the features defined in the independent claims. Preferred embodiments are defined in the dependent claims.

Embodiments provide a controller for an air conditioner for identifying information on a product communicatively connected to the controller and displaying a screen corresponding to the information.

In one embodiment, a controller for an air conditioner includes a communication device configured to communicate with the air conditioner, and an output device configured to display, on a management screen, information received from the air conditioner communicatively connected to the communication device, wherein, once the communication device is communicatively connected to the air conditioner, the output device receives product information of the air condition from the air conditioner and displays the management screen corresponding to the product information received.

If the communication device is disconnected from the air conditioner and is connected to an another-type air conditioner, the communication device receives the product information from the another-type air conditioner, and the output device displays, on the management screen, the product information received from the another-type product information.

The management screen comprises a communication state display region to display a communication state, wherein the communication state display region displays information indicating normal communication or occurrence of a communication error.

The output device displays, on the management screen, a product display region and a plurality of information display regions to display an operation state of the air conditioner, wherein a layout of the plurality of information display regions and a layout of the product display region on the management screen are constant regardless of a category or a type of the air conditioner communicatively connected to the communication device.

At least one of the plurality of information display regions displays, fixed information displayed in common regardless of the category or type of the air conditioner, and variable information that varies with the category or type of the air conditioner.

If the type of the air conditioner communicatively connected is changed, the output device continuously displays the fixed information on the at least one of the plurality of information display regions, and deletes or changes a part or the entirety of the variable information or adds information thereto.

The fixed information is changed in terms of a display position on the at least one of the plurality of information display regions according to the category or type of the air conditioner.

The variable information comprises: common information displayed in common for air conditioners communicatively connected to the communication device, the air conditioners belonging to the same category; and individual information displayed individually for each of different types of air conditioners belonging to the same category.

The individual information is displayed or not displayed on the information display region according to the type of the air conditioner.

A part or the entirety of the common information is the same or different according to the category of the air conditioner.

The at least one of the plurality of information display regions comprises a plurality of display blocks for displaying the fixed information and the individual information, wherein the fixed information and the individual information corresponding to the air conditioner communicatively connected to the communication device are displayed on each of the plurality of display blocks.

The output device displays a unit change screen when a unit change command is input.

The unit change screen displays a selection part for selecting a unit of at least one of a temperature, a pressure, a flow rate or a power.

The unit change screen displays a default unit selection part for setting a default unit.

If a unit of information received from the air conditioner communicatively connected is different from that set in the controller, the unit of the information received is converted into a set unit, and the output device displays unit-converted information on the management screen.

The details of one or more embodiments are set forth in the accompanying drawings and the description below. Other features will be apparent from the description and drawings, and from the claims.
Fig. 1 is a diagram illustrating a chiller system that is a type of an air conditioner according to an embodiment.
Fig. 2 is a diagram illustrating an air conditioner and a controller according to an embodiment.
Fig. 3 is a flowchart illustrating a process performed after a chiller module and a controller are communicatively connected to each other according to an embodiment.
Fig. 4 is a flowchart illustrating a process in which a controller according to an embodiment is disconnected from a chiller module and then is communicatively connected to another chiller module.
Figs. 5 to 8 are diagrams illustrating management screens displayed on an output device according to an embodiment.
Fig. 9 is a diagram illustrating a screen for changing a unit of information display according to an embodiment.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

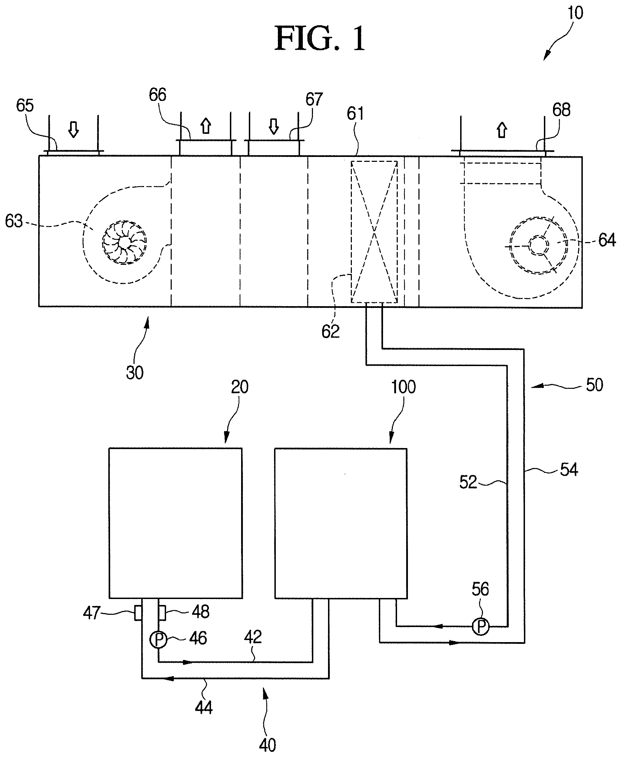

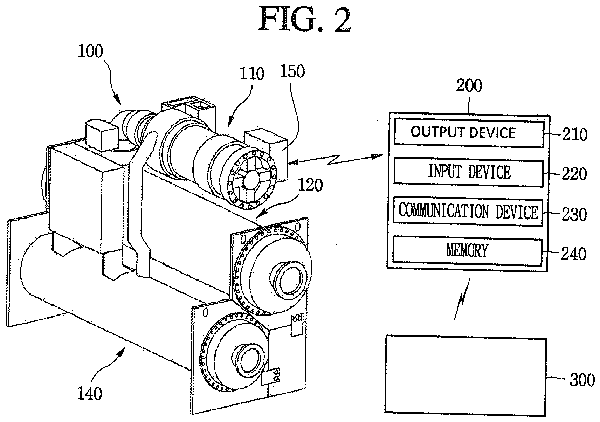

Fig. 1 is a diagram illustrating a chiller system that is a type of an air conditioner according to an embodiment, and Fig. 2 is a diagram illustrating an air conditioner and a controller according to an embodiment.

Referring to Figs. 1 and 2, a chiller system 10 that is an air conditioner according to an embodiment may include a chiller module 100 for which a refrigeration cycle is established, a cooling tower 20 for supplying cooling water to the chiller module 100, and a cold water demander 30 in which cold water that exchanges heat with the chiller module 100 is circulated.

The cold water demander 30 may be construed as a device or a space for performing an air conditioning operation using cold water.

A cooling water circulation passage 40 may be provided between the chiller module 100 and the cooling tower 20. The cooling water circulation passage 40 is a pipe for guiding cooling water so that the cooling water circulates through the cooling tower 20 and a condenser 120 of the chiller module 100.

The cooling water circulation passage 40 may include a cooling water inflow passage 42 for guiding cooling water so that the cooling water flows into the condenser 120, and a cooling water outflow passage 44 for guiding the cooling water so that the cooling water heated by the condenser 120 flows to the cooling tower 20.

A cooling water pump 46 driven for flowage of cooling water may be provided to at least one of the cooling water inflow passage 42 and the cooling water outflow passage 44. Fig. 1 exemplarily illustrates that the cooling water pump 46 is provided to the cooling water inflow passage 42.

The cooling water outflow passage 44 may be provided with an outflow water temperature sensor 47 for sensing a temperature of cooling water that flows into the cooling tower 20. The cooling water inflow passage 42 may be provided with an inflow water temperature sensor 48 for sensing a temperature of cooling water discharged from the cooling tower 20.

A cold water circulation passage 50 may be provided between the chiller module 100 and the cold water demander 30. The cold water circulation passage 50 is a pipe for guiding cold water so that the cold water circulates through the cold water demander 30 and an evaporator 140 of the chiller module 100.

The cold water circulation passage 50 may include a cold water inflow passage 52 for guiding cold water so that the cold water flows into the evaporator 140, and a cold water outflow passage 54 for guiding the cold water so that the cold water cooled by the evaporator 140 flows to the cold water demander 30.

A cold water pump 56 driven for flowage of cold water may be provided to at least one of the cold water inflow passage 52 and the cold water outflow passage 54. Fig. 1 exemplarily illustrates that the cold water pump 56 is provided to the cold water inflow passage 52.

The cold water demander 30 may be a water-cooled air conditioner that allows heat exchange between air and cold water.

For example, the cold water demander 30 may include at least one of an air handling unit (AHU) for mixing indoor air and outdoor air and inducing heat change between the mixed air and cold water to discharge the mixed air into an indoor space, a fan coil unit (FCU) installed in an indoor area to induce heat change between the indoor air and the cold water and then discharge the indoor air into the indoor space, and a bottom piping unit laid at a bottom of the indoor area.

Fig. 1 exemplarily illustrates that the cold water demander 30 is configured with the air handling unit.

In detail, the air handling unit may include a casing 61, a cold water coil 62 installed inside the casing 61 to allow cold water to pass therethrough, and ventilators 63 and 64 provided to both sides of the cold water coil 62 to suction indoor air and outdoor air and blow the suctioned air into an indoor space.

The ventilators may include a first ventilator 63 for suctioning the indoor air and the outdoor air into the casing 61 and a second ventilator 64 for exhausting conditioned air out of the casing 61.

An indoor air suctioning part 65, an indoor air exhausting part 66, an outside air suctioning part 67, and a conditioned air exhausting part 68 are formed in the casing 61.

When the ventilators 63 and 64 are driven, a part of air suctioned through the indoor air suctioning part 65 is exhausted through the indoor exhausting part 66, and the remaining air not exhausted through the indoor air exhausting part 66 is mixed with outdoor air suctioned through the outside air suctioning part 67 so that the mixed air exchanges heat with the cold water coil 62.

Furthermore, the mixed air which is heat-changed (cooled) with the cold air coil 62 may be discharged into the indoor area through the conditioned air exhausting part 68.

The chiller module 100 may include a compressor 110 for compressing a refrigerant, the condenser 120 into which a high-temperature and high-pressure refrigerant compressed by the compressor 110 flows, an expansion unit (not shown) for decompressing the refrigerant condensed by the condenser 120, and the evaporator 140 for evaporating the refrigerant decompressed by the expansion unit.

Furthermore, the cooling water circulation passage 40 may be connected to the condenser 120, and the cold water circulation passage 50 may be connected to the evaporator 140.

In the present disclosure, since the chiller module 100 may be implemented using a known structure, a detailed description of the chiller module 100 is not provided.

The chiller module 100 may be connected to a module controller 150 for controlling and monitoring the chiller module 100. The module controller 150 may communicate with the chiller module 100.

The module controller 150 may be installed on one side of the chiller module 100.

The module controller 150 may communicate with a remote controller 200.

The remote controller 200 may communicate with the module controller 150 wirelessly or by wire.

The remote controller 200 may communicate with not only the chiller module 100 but also an additional air conditioner 300, and may control or monitor the additional air conditioner 300. Here, the additional air conditioner 300 may be a chiller module, an air conditioner for cooling, a heat pump for both heating and cooling, or a ventilation device. It should be understood that the type of the additional air conditioner 300 is not particularly limited herein. Depending on a building that requires air conditioning, one or both of the chiller module 100 and the additional air conditioner 300 may be installed. In addition, the remote controller 200 may communicate with the chiller module 100 and/or the additional air conditioner 300 installed in a building that requires air conditioning.

In the present disclosure, the description of information monitored or displayed by the remote controller 200 may be applied to the module controller 150.

Therefore, hereinafter the remote controller 200 is simply referred to as a "controller 200" for convenience. The case where the controller 200 communicates with the chiller module 100 will be described in detail.

The controller 200 may include an output device 210 for outputting information and an input device 220 for receiving information.

The output device 210 may include a sound output unit for outputting a sound and/or a display unit for emitting light to presenting a visual indication. In detail, the display unit may include at least one of a light emitting polymer display (LPD), a liquid crystal display (LCD), a thin-film transistor liquid crystal display (TFT LCD), an organic light-emitting diode (OLED), a flexible display, and a 3D display, or combinations thereof, but is not limited thereto.

The output device 210 may display information on a subject to which the controller 200 is connected. That is, the controller 200 may display information on the chiller module 100.

The output device 210 may be configured with a touch screen. In this case, the output device 210 may be integrated with the input device. The touch screen may display a visual output to a user, and may receive an input from the user on the basis of a tactile contact. The visual output may include a graphic, a text, an icon, a video, and a combination thereof. In the case where the output device 210 includes the touch screen, each button on the input device 220 may be replaced with a user interface displayed on the touch screen. That is, the input device 220 may not be provided.

The controller 200 may include a communication device 230.

The communication device 230 may receive information from the chiller module 100, and may transmit a control command to the chiller module 100.

In the case where the communication device 230 wirelessly communicates with the chiller module 100, the communication device 230 may include a radio frequency (RF) circuit. The communication device 230 may transmit/receive an RF signal that is an electromagnetic signal. The RF circuit may convert an electric signal into an electromagnetic signal and vice versa, and may communicate with a communication network and other communication devices using the electromagnetic signal.

For example, the RF circuit may include at least one of an antenna system, an RF transceiver, at least one amplifier, a tuner, at least one oscillator, a digital signal processor, a CODEC chipset, and a memory, but is not limited thereto and may include known circuits for performing functions of the foregoing elements. Alternatively, the communication device 230 may be based on at least one of wireless communication technologies such as Bluetooth, radio frequency identification, infrared data association (IrDA), ultra wideband (UWB), ZigBee, and Wi-Fi.

The controller 200 may include a memory 240 for storing information received from the chiller module 100 and a processor for controlling the output device 210. Furthermore, the memory 240 may store layout information for configuring a screen to be displayed on the output device 210 and a list of information to be displayed for each air conditioner.

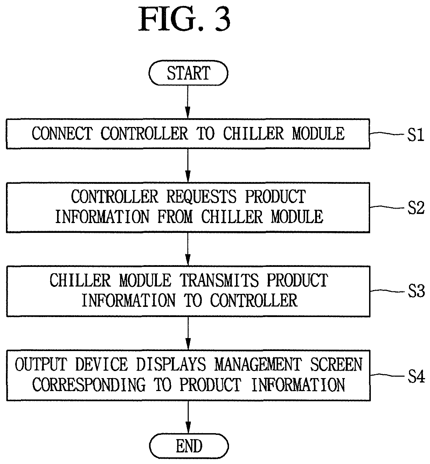

Fig. 3 is a flowchart illustrating a process performed after a chiller module and a controller are communicatively connected to each other according to an embodiment.

Referring to Fig. 3, the controller 200 may be communicatively connected to the chiller module 100 (S1). For example, the controller 200 may be communicatively connected to the module controller 150.

When the controller 200 is communicatively connected to the chiller module 100, the controller 200 requests product information from the controller 100 (S2).

Then, the chiller module 100 may transmit the product information thereof to the controller 200 (S3). Here, the product information may include category information and product type information of the chiller module 100.

For example, a category of the chiller module 100 may include an absorption-type chiller, a turbo-type chiller, a screw-type chiller, and the like.

The product type information may be classified according to an operation scheme or a structure within the same category. For example, in the case of the turbo-type chiller, product types thereof may be classified according to the number of compressors, in the case of the screw-type chiller, product types thereof may be classified into an air cooling type or a water cooling type, and, in the case of the absorption-type chiller, product types thereof may be classified according to a temperature of steam or whether steam is generated.

Upon receiving a product information request from the controller 200, the chiller module 100 may transmit the category information and the product type information to the controller 200. Alternatively, the chiller module 100 may transmit the product type information alone to the controller 200.

The output device 210 of the controller 200 may display a management screen corresponding to the product information received from the chiller module 100 (S4).

According to the present embodiment, the controller 200 may be aware of the product information of the chiller module 100 even though the user does not input the product information on the chiller module 100 communicatively connected to the controller 200. Therefore, since the user does not need to check the product information of the chiller module 100 for itself, the convenience of the user may be improved.

Furthermore, since the user does not need to input the product information on the chiller module 210 communicatively connected to the controller 200, a control error of the controller 200 or a display error of the output device 210 caused by an erroneous input of the product information from the user may be prevented.

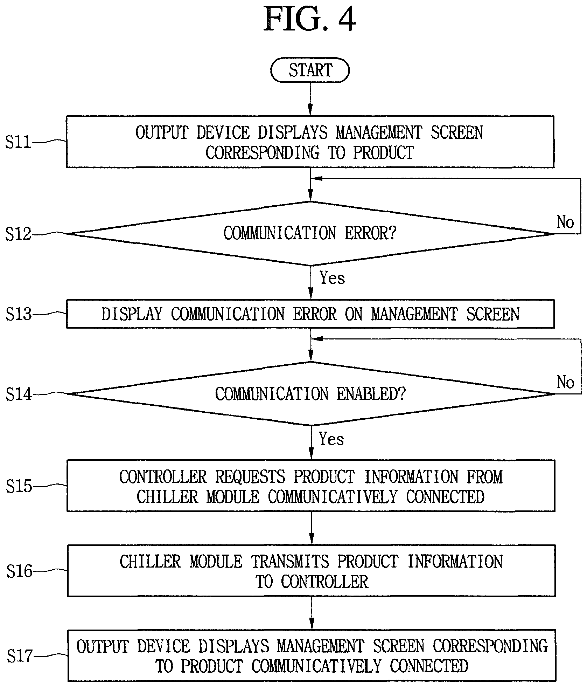

Fig. 4 is a flowchart illustrating a process in which a controller according to an embodiment is disconnected from a chiller module and then is communicatively connected to another chiller module.

Referring to Fig. 4, the output device 210 may display a management screen corresponding to a communicatively connected product as described above (S11).

In this state, the controller 200 may determine whether an error of communication with the chiller module 100 occurs (S12).

In the present disclosure, for example, the error of communication between the controller 200 and the chiller module 100 may occur when the chiller module 100 is disconnected from the controller 200 so as to be replaced with another chiller module.

If it is determined that the error of communication with the chiller module 100 occurs in operation S12, the output device 210 may display communication error information on a management screen (S13).

While the communication error information is displayed on the management screen, the controller 200 determines whether it is possible to communicate with the chiller module 100 (S14).

If it is determined that communication with the chiller module 100 is possible in operation S14, the controller 200 requests the product information from the chiller module 100 communicatively connected thereto (S15).

Then, the chiller module 100 may transmit the product information thereof to the controller 200 (S16).

The output device 210 may display a management screen corresponding to a communicatively connected product (S17).

Here, the product (chiller module) corresponding to the management screen displayed on the output device in operation S11 may be equal to or different from the product (chiller module) corresponding to the management screen displayed on the output device in operation S17.

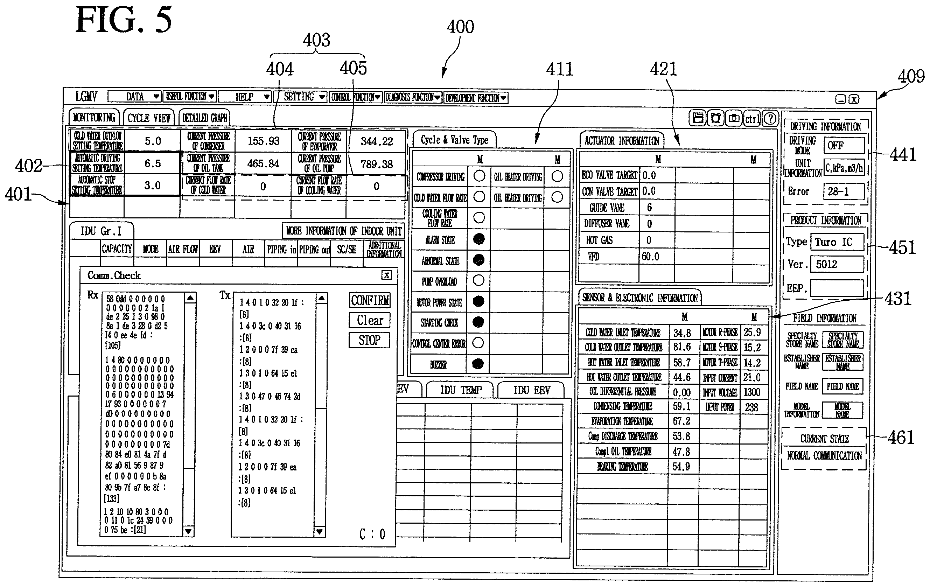

Figs. 5 to 8 are diagrams illustrating management screens displayed on an output device according to an embodiment.

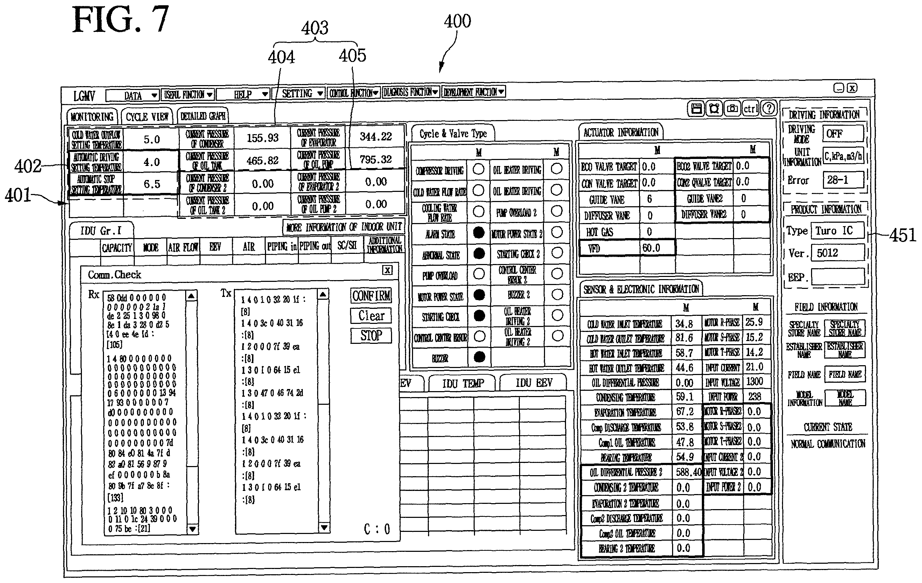

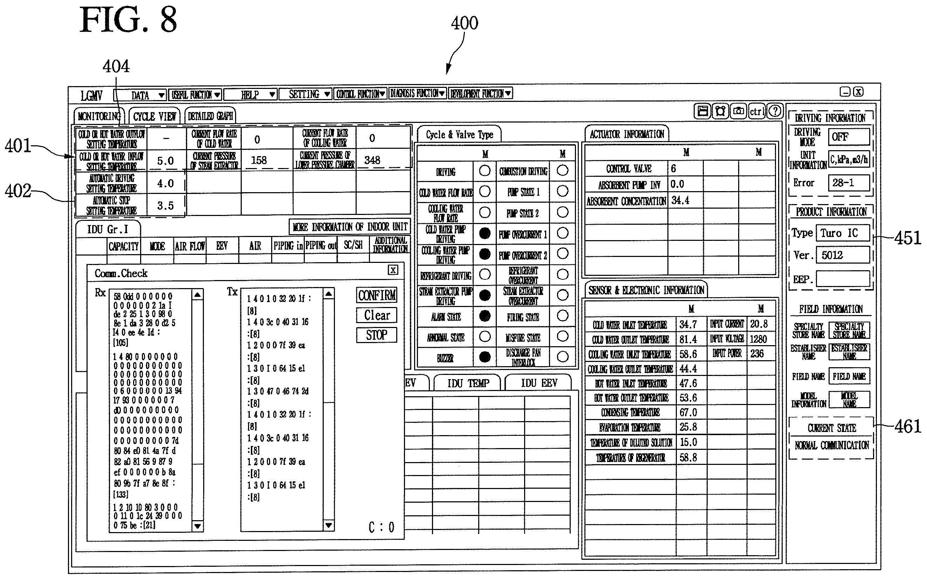

Fig. 5 exemplarily illustrates a management screen corresponding to a first-type chiller module belonging to a first category, Fig. 7 exemplarily illustrates a management screen corresponding to a second-type chiller module belonging to the first category, and Fig. 8 exemplarily illustrates a management screen corresponding to a first-type chiller module belonging to a second category.

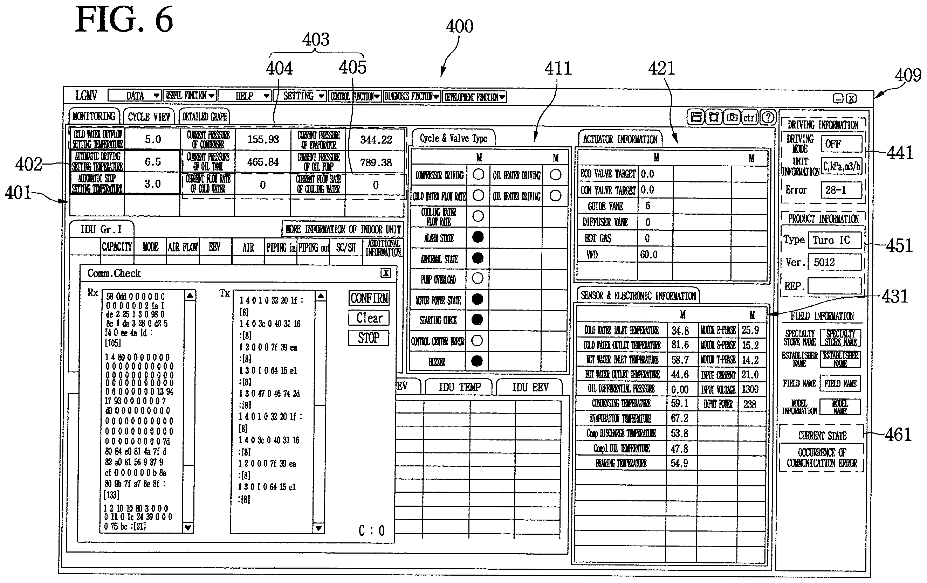

Fig. 6 is a diagram illustrating the management screen displayed on the output device in the case where a communication error occurs while the controller communicates with the chiller module normally.

Referring to Fig. 5, the output device 210 may display a management screen 400 corresponding to the chiller module 100 communicatively connected. The management screen 400 may display, on a single screen, various information received from the chiller module 100. For example, the management screen 400 may display product information, state information, a communication state and the like of the chiller module.

The management screen 400 may include a menu region 409. The menu region 409 may display a menu button for selecting a plurality of menus. The menu button may be selected by a touch of the user or using the input device 220.

The management screen 400 may include a first information display region 401 for displaying main information related to operation of the chiller module 100.

Furthermore, the management screen 400 may include a second information display region 411 for displaying information related to a valve or information related to a cycle of the chiller module 100.

The management screen 400 may include a third information display region 421 for displaying information related to an actuator provided to the chiller module 100.

The management screen 400 may include a fourth information display region 431 for displaying information on a sensor or electronic information.

Furthermore, the management screen 400 may include at least one of a driving information display region 441, a product display region 451, and a communication state display region 461.

In the present embodiment, the management screen 400 may display the plurality of information display regions 401, 411, 421 and 431 in common regardless of the category or type of a chiller module communicatively connected to the controller 200.

That is, the layout of the plurality of information display regions 401, 411, 421 and 431 on the management screen 400 may be fixed.

The driving information display region 441 may display a driving mode of the chiller module, for example, ON or OFF information, or information on units of values displayed on the management screen.

The product display region 451 may display the product information of the chiller module 100 communicatively connected. Here, the information displayed on the product display region 451 may include at least product type information.

The communication state display region 461 may display a state of communication with the chiller module 100. For example, in the case where the controller 200 communicates with the chiller module 100 normally, the communication state display region 461 may display information indicating normal communication.

The first information display region 401 may display fixed information 402 irrelevant to the category or product type of a chiller module and variable information 403 that varies with the category or product type of a chiller module.

That is, the fixed information 402 is not deleted from the first information display region 401 even if the category or product type of a chiller module is changed.

On the contrary, the variable information 403 may be displayed or may not be displayed on the first information display region 401 according to the category or product type of a chiller module. That is, if the type of an air conditioner communicatively connected is changed, the output device 210 may continuously display the fixed information 402 on the first information display region 401, and may delete or change a part or the entirety of the variable information 403 or may add information thereto.

In the present embodiment, the description of the fixed information 402 and the variable information 403 displayed on the first information display region 401 may be applied to the other information display regions 411, 421 and 431.

However, both of the fixed information and the variable information or the variable information alone may be displayed according to the information display regions 411, 421 and 431.

Each of the information display regions 401, 411, 421 and 431 may be divided into a plurality of display blocks for separately displaying a plurality of pieces of information.

The fixed information or the variable information may be displayed on each display block. Here, the number of the plurality of display blocks may be set to be constant regardless of the category or product type of a chiller module, and a fixed number of the plurality of display blocks may be displayed on the management screen.

Furthermore, according to the category or type of a chiller module, the fixed information or the variable information may be displayed on some of the plurality of display blocks or the fixed information and the variable information may be displayed on all of the plurality of display blocks.

For example, the first information display region 401 may be divided into 12 display blocks, and information may be displayed on some or all of the 12 display blocks. Fig. 5 exemplarily illustrates that information is displayed on 9 display blocks out of 12 display blocks.

Referring to Fig. 6, in the case where the controller 200 determines whether a communication error occurs as described above with reference to Fig. 4, the communication state display region 461 may display information for notifying occurrence of the communication error. Here, as illustrated in Figs. 5 and 6, if the communication error occurs while the controller 200 communicates with the chiller module 100 normally, the regions of the management screen 400 other than the communication state display region 461 may maintain previously displayed information.

If the controller 200 is communicatively connected to the chiller module 100 while the communication error is displayed on the management screen as illustrated in Fig. 6, the output device 210 displays the management screen 400 corresponding to the chiller module 100 communicatively connected. Here, the communication state display region 461 of the management screen 400 may display information indicating normal communication. Furthermore, the product display region 451 may display information on the communicatively connected product.

Referring to Fig. 7, the output device 210 may display the management screen 400 corresponding to the second-type chiller module belonging to the first category.

In the present embodiment, if a chiller module of another type is communicatively connected to the controller while the management screen of Fig. 5 is displayed, only the information displayed on each information display region of the management screen may be changed.

That is, the output device 210 changes only the information displayed within the same layout of the management screen regardless of the type of a chiller module.

Referring to Figs. 5 and 7, the fixed information 402 and the variable information 403 may be displayed within the first information display region 401.

The variable information 403 may include common information 404 displayed regardless of the types of chiller modules belonging to the same category and individual information 405 selectively displayed according to the types of chiller modules belonging to the same category.

The common information 404 which is not particularly limited may include at least one of a cold water outlet setting temperature, a current pressure of a condenser, a current pressure of an evaporator, a current pressure of an oil tank, and a current pressure of an oil pump.

In the case of the first-type chiller module belonging to the first category, the individual information 405 is not particularly limited but may be at least one of a current flow rate of cold water and a current flow rate of cooling water.

In the case of the second-type chiller module belonging to the first category, the individual information 405 is not particularly limited but may be a current pressure of a second condenser, a current pressure of a second evaporator, a current pressure of a second oil tank, or a current pressure of a second oil pump.

In brief, regarding chiller modules belonging to the same category, the common information 404 may be displayed on the first information display region 401 regardless of the types of the chiller modules, and the individual information 405 may be displayed or may not be displayed on the first information display region 401 according to the types of the chiller modules.

Referring to Fig. 8, when the first-type chiller module belonging to the second category is connected to the controller 200, the output device 210 displays the management screen 400 corresponding to the first-type chiller module belonging to the second category. Furthermore, the product information display region may display the product information of the first-type chiller module belonging to the second category.

In the present embodiment, only the information displayed within the same layout of the management screen is changed even if the category of a chiller module is changed.

The fixed information 402 and the variable information 403 may be displayed on the first information display region 401. Here, the variable information 403 illustrated in Fig. 8 may be equal to or different from the variable information 403 illustrated in Fig. 7 partially or entirely.

The fixed information 402 displayed on the first information display region 401 may be changed in terms of a display position according to the type of a chiller module. That is, a position of a display block on which the fixed information 402 is displayed may be changed.

According to the proposed embodiments, even if the controller is disconnected from a chiller module and then is communicatively connected to a chiller module of another type, the controller may automatically check the product information of the chiller module and may display a management screen corresponding to the product information, so that the convenience of the user is improved.

Furthermore, since the output device only changes displayed information while maintaining the layout of the information regions of the management screen regardless of whether the category or type of a product is changed, the user may easily check specific information from the management screen regardless of the type of a chiller module. That is, the user may intuitively check information on a chiller module.

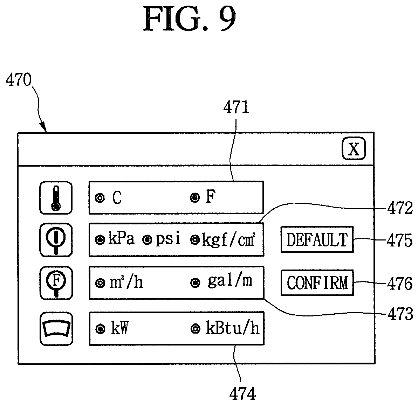

Fig. 9 is a diagram illustrating a screen for changing a unit of information display according to an embodiment.

Referring to Figs. 5 and 9, when a setting menu is selected from the menu region 409, an option for changing a unit may be displayed, and, if the option for changing a unit is selected, a unit change screen 470 may be displayed as illustrated in Fig. 9.

The unit change screen 470 may display a temperature unit selection part 471 for selecting a temperature unit. The unit of Celsius or Fahrenheit may be selected through the temperature unit selection part 471.

The unit change screen 470 may display a pressure unit selection part 472 for selecting a pressure unit. One of the units of kPa, psi, and kgf/cm² may be selected using the pressure unit selection part 472.

The unit change screen 470 may display a flow rate unit selection part 473 for selecting a flow rate unit. The unit of m³/h or gal/m may be selected using the flow rate unit selection part 473.

The unit change screen 470 may display a power unit selection part 474 for selecting a power unit. The unit KW or kBtu/h may be selected using the power unit selection part 474.

Furthermore, the unit change screen 470 may display a default unit selection part 475 for selecting a default unit and a confirmation selection part 476 for applying a selected unit.

Although not restrictive, the unit of Celsius for a temperature, the unit of kPa for a pressure, the unit of m³/h for a flow rate, and the unit of kBtu/h for a power may be selected if the default unit selection part 475 is selected.

Information may be displayed on the management screen 400 with the selected units.

The controller 200 may communicate with at least one air conditioner. Here, a unit of information transmitted/received during a communication process may be changed according to the types of air conditioners.

For example, the chiller module may transmit information with a pressure unit of kgf/cm² to the controller 200, and a heat pump may transmit information with a pressure unit of kPa to the controller 200.

If the pressure unit is set as kPa in the controller 200, the controller 200 may directly display pressure information received from the heat pump, and may convert a unit of pressure information received from the chiller module into kPa to display the pressure information. However, if an operation error occurs during a unit conversion process, the same value may be displayed for each unit through compensation.

According to the proposed embodiments, even if a unit of information transmitted/received during a communication process is different from that set in the controller, the controller may perform unit conversion so that the information may be displayed normally.

Furthermore, since the unit conversion is enabled, information units that vary with nations where air conditioners are installed may be efficiently handled.

Moreover, even if different communication schemes are used according to the types of air conditioners, a single program for running a management screen may be used. Therefore, it is not necessary to produce and execute a plurality of programs.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A controller for an air conditioner, comprising:
a communication device (230) configured to communicate with the air conditioner; and
an output device (210) configured to display, on a management screen (400), information received from the air conditioner communicatively connected to the communication device (230),
wherein, once the communication device (230) is communicatively connected to the air conditioner, the output device (210) receives product information of the air condition from the air conditioner and displays the management screen (400) corresponding to the product information received,
wherein, if the communication device (230) is disconnected from the air conditioner and is connected to an another-type air conditioner, the communication device (230) receives the product information from the another-type air conditioner, and the output device (210) displays, on the management screen (400), the product information received from the another-type product information,
wherein the output device (210) displays, on the management screen (400), a product display region (451) and a plurality of information display regions (401, 411, 421, 431) to display an operation state of the air conditioner,
wherein a layout of the plurality of information display regions (401, 411, 421, 431) and a layout of the product display region (451) on the management screen (400) are constant regardless of a category or a type of the air conditioner communicatively connected to the communication device (230),
wherein at least one of the plurality of information display regions (401, 411, 421, 431) displays,
fixed information (402) displayed being changed in terms of a display position on the at least one of the plurality of information display regions (401, 411, 421, 431) according to the category or type of the air conditioner, and
variable information (403) comprising
common information (404) displayed in common for air conditioners communicatively connected to the communication device (230), the air conditioners belonging to the same category; and
individual information (405) displayed individually for each of different types of air conditioners belonging to the same category.

2. The controller according to claim 1,
wherein the management screen (400) comprises a communication state display region (461) to display a communication state,
wherein the communication state display region (461) displays information indicating normal communication or occurrence of a communication error.

3. The controller according to claim 1 or 2, wherein, if the type of the air conditioner communicatively connected is changed, the output device (210) continuously displays the fixed information (402) on the at least one of the plurality of information display regions (401, 411, 421, 431), and deletes or changes a part or the entirety of the variable information (403) or adds information thereto.

4. The controller according to any one of claims 1 to 3, wherein the individual information (405) is displayed or not displayed on the information display region (401, 411, 421, 431) according to the type of the air conditioner.

5. The controller according to any one of claims 1 to 4, wherein a part or the entirety of the common information (404) is the same or different according to the category of the air conditioner.

6. The controller according to any of claims 1 to 5,
wherein the at least one of the plurality of information display regions (401, 411, 421, 431) comprises a plurality of display blocks for displaying the fixed information (402) and the variable information (403),
wherein the fixed information (402) and the variable information (403) corresponding to the air conditioner communicatively connected to the communication device (230) are displayed on each of the plurality of display blocks.

7. The controller according to any of claims 1 to 6, wherein the output device (210) displays a unit change screen (470) when a unit change command is input.

8. The controller according to claim 7, wherein the unit change screen (470) displays a selection part (471, 472, 473, 474) for selecting a unit of at least one of a temperature, a pressure, a flow rate or a power.

9. The controller according to claim 7 or 8, wherein the unit change screen (470) displays a default unit selection part (475) for setting a default unit.

10. The controller according to any of claims 1 to 9, wherein, if a unit of information received from the air conditioner communicatively connected is different from that set in the controller, the unit of the information received is converted into a set unit, and the output device (210) displays unit-converted information on the management screen (400).

## Patentansprüche

1. Steuereinheit für eine Klimaanlage, die aufweist:
eine Kommunikationsvorrichtung (230), die konfiguriert ist, mit der Klimaanlage zu kommunizieren; und
eine Ausgabevorrichtung (210), die konfiguriert ist, auf einem Verwaltungsbildschirm (400) Informationen anzuzeigen, die von der Klimaanlage empfangen werden, die kommunikativ mit der Kommunikationsvorrichtung (230) verbunden ist, wobei, sobald die Kommunikationsvorrichtung (230) kommunikativ mit der Klimaanlage verbunden ist, die Ausgabevorrichtung (210) Produktinformationen der Klimaanlage von der Klimaanlage empfängt und den Verwaltungsbildschirm (400) anzeigt, der den empfangenen Produktinformationen entspricht,
wobei, wenn die Kommunikationsvorrichtung (230) von der Klimaanlage getrennt und mit einer Klimaanlage eines anderen Typs verbunden ist, die Kommunikationsvorrichtung (230) die Produktinformationen von der Klimaanlage des anderen Typs empfängt und die Ausgabevorrichtung (210) auf dem Verwaltungsbildschirm (400) die von der Klimaanlage des anderen Typs empfangenen Produktinformationen anzeigt,
wobei die Ausgabevorrichtung (210) auf dem Verwaltungsbildschirm (400) einen Produktanzeigebereich (451) und mehrere Informationsanzeigebereiche (401, 411, 421, 431) anzeigt, um einen Betriebszustand der Klimaanlage anzuzeigen,
wobei ein Layout der mehreren Informationsanzeigebereiche (401, 411, 421, 431) und ein Layout des Produktanzeigebereichs (451) auf dem Verwaltungsbildschirm (400) unabhängig von einer Kategorie oder einem Typ der Klimaanlage konstant sind, die kommunikativ mit der Kommunikationsvorrichtung (230) verbunden ist,
wobei mindestens einer der mehreren Informationsanzeigebereiche (401, 411, 421, 431) anzeigt:
feste Informationen (402), die hinsichtlich einer Anzeigeposition auf dem mindestens einen der mehreren Informationsanzeigebereiche (401, 411, 421, 431) gemäß der Kategorie oder dem Typ der Klimaanlage geändert angezeigt werden, und
variable Informationen (403), die aufweisen:
gemeinsame Informationen (404), die gemeinsam für die mit der Kommunikationsvorrichtung (230) kommunikativ verbundenen Klimaanlagen angezeigt werden, wobei die Klimaanlagen zur selben Kategorie gehören; und
individuelle Informationen (405), die individuell für jeden der verschiedenen Typen von Klimaanlagen angezeigt werden, die zur selben Kategorie gehören.

2. Steuereinheit nach Anspruch 1,
wobei der Verwaltungsbildschirm (400) einen Kommunikationsstatus-Anzeigebereich (461) aufweist, um einen Kommunikationsstatus anzuzeigen,
wobei der Kommunikationsstatus-Anzeigebereich (461) Informationen anzeigt, die eine normale Kommunikation oder das Auftreten eines Kommunikationsfehlers anzeigen.

3. Steuereinheit nach Anspruch 1 oder 2, wobei, wenn der Typ der kommunikativ verbundenen Klimaanlage geändert wird, die Ausgabevorrichtung (210) kontinuierlich die festen Informationen (402) auf dem mindestens einen der mehreren Informationsanzeigebereiche (401, 411, 421, 431) anzeigt und einen Teil oder die Gesamtheit der variablen Informationen (403) löscht oder ändert oder Informationen hinzufügt.

4. Steuereinheit nach einem der Ansprüche 1 bis 3, wobei die individuellen Informationen (405) auf dem Informationsanzeigebereich (401, 411, 421, 431) gemäß dem Typ der Klimaanlage angezeigt oder nicht angezeigt werden.

5. Steuereinheit nach einem der Ansprüche 1 bis 4, wobei ein Teil oder die Gesamtheit der gemeinsamen Informationen (404) je nach der Kategorie der Klimaanlage derselbe ist oder sich unterscheidet.

6. Steuereinheit nach einem der Ansprüche 1 bis 5, wobei mindestens einer der mehreren Informationsanzeigebereiche (401, 411, 421, 431) mehrere Anzeigeblöcke zum Anzeigen der festen Informationen (402) und der variablen Informationen (403) aufweist,
wobei die festen Informationen (402) und die variablen Informationen (403), die der Klimaanlage entsprechen, die kommunikativ mit der Kommunikationsvorrichtung (230) verbunden ist, auf jedem von mehreren Anzeigeblöcken angezeigt werden.

7. Steuereinheit nach einem der Ansprüche 1 bis 6, wobei die Ausgabevorrichtung (210) einen Einheitsänderungs-Bildschirm (470) anzeigt, wenn ein Einheitsänderungs-Befehl eingegeben wird.

8. Steuereinheit nach Anspruch 7, wobei der Einheitsänderungs-Bildschirm (470) einen Auswahlteil (471, 472, 473, 474) zur Auswahl einer Einheit von mindestens einer der Größen Temperatur, Druck, Durchfluss oder Leistung anzeigt.

9. Steuereinheit nach Anspruch 7 oder 8, wobei der Einheitsänderungs-Bildschirm (470) einen Standardeinheiten-Auswahlteil (475) zum Einstellen einer Standardeinheit anzeigt.

10. Steuereinheit nach einem der Ansprüche 1 bis 9, wobei, wenn eine Einheit der Informationen, die von der kommunikativ verbundenen Klimaanlage empfangen werden, sich von der in der Steuereinheit eingestellten unterscheidet, die Einheit der empfangenen Informationen in eine eingestellte Einheit umgewandelt wird und die Ausgabevorrichtung (210) die einheitsumgewandelten Informationen auf dem Verwaltungsbildschirm (400) anzeigt.

## Revendications

1. Contrôleur pour un climatiseur, comprenant :
un dispositif de communication (230) prévu pour communiquer avec le climatiseur ; et un dispositif de sortie (210) prévu pour afficher, sur un écran de gestion (400), des informations reçues du climatiseur relié en communication au dispositif de communication (230),
où, une fois le dispositif de communication (230) relié en communication au climatiseur, le dispositif de sortie (210) reçoit du climatiseur des informations de produit de l'air conditionné et affiche l'écran de gestion (400) correspondant aux informations de produit reçues,
où, si le dispositif de communication (230) est déconnecté du climatiseur et est relié à un climatiseur d'un autre type, le dispositif de communication (230) reçoit les informations de produit du climatiseur d'un autre type, et le dispositif de sortie (210) affiche, sur l'écran de gestion (400), les informations de produit reçues du climatiseur d'un autre type,
où le dispositif de sortie (210) affiche, sur l'écran de gestion (400), une zone d'affichage de produit (451) et une pluralité de zones d'affichage d'informations (401, 411, 421, 431) pour l'affichage d'un état de fonctionnement du climatiseur,
où la présentation de la pluralité de zones d'affichage d'informations (401, 411, 421, 431) et la présentation de la zone d'affichage de produit (451) sur l'écran de gestion (400) sont constantes indépendamment de la catégorie ou du type du climatiseur relié en communication au dispositif de communication (230),
où un affichage est effectué par au moins une zone de la pluralité de zones d'affichage d'informations (401, 411, 421, 431),
des informations fixes (402) affichées étant changées relativement à une position d'affichage sur ladite au moins une zone de la pluralité de zones d'affichage d'informations (401, 411, 421, 431) en fonction de la catégorie ou du type du climatiseur, et
des informations variables (403) comprenant
des informations communes (404) affichées en commun pour des climatiseurs reliés en communication au dispositif de communication (230), lesdits climatiseurs appartenant à la même catégorie ; et
des informations individuelles (405) affichées spécifiquement pour chaque type différent de climatiseurs appartenant à la même catégorie.

2. Contrôleur selon la revendication 1,
où l'écran de gestion (400) comprend une zone d'affichage d'état de communication (461) pour afficher un état de communication,
où la zone d'affichage d'état de communication (461) affiche des informations indiquant une communication normale ou la survenue d'une erreur de communication.

3. Contrôleur selon la revendication 1 ou la revendication 2, où, si le type du climatiseur relié en communication est changé, le dispositif de sortie (210) affiche de manière continue les informations fixes (402) sur ladite au moins une zone de la pluralité de zones d'affichage d'informations (401, 411, 421, 431), et supprime ou change une partie ou la totalité des informations variables (403), ou y ajoute des informations.

4. Contrôleur selon l'une des revendications 1 à 3, où les informations individuelles (405) sont affichées ou non sur la zone d'affichage d'informations (401, 411, 421, 431) en fonction du type du climatiseur.

5. Contrôleur selon l'une des revendications 1 à 4, où une partie ou la totalité des informations communes (404) sont identiques ou différentes en fonction de la catégorie du climatiseur.

6. Contrôleur selon l'une des revendications 1 à 5, où ladite au moins une zone de la pluralité de zones d'affichage d'informations (401, 411, 421, 431) comprend une pluralité de blocs d'affichage pour afficher les informations fixes (402) et les informations variables (403), où les informations fixes (402) et les informations variables (403) correspondant au climatiseur relié en communication au dispositif de communication (230) sont affichées sur chaque bloc de la pluralité de blocs d'affichage.

7. Contrôleur selon l'une des revendications 1 à 6, où le dispositif de sortie (210) affiche un écran de changement d'unité (470) quand une instruction de changement d'unité est entrée.

8. Contrôleur selon la revendication 7, où l'écran de changement d'unité (470) affiche une section de sélection (471, 472, 473, 474) pour la sélection d'une unité entre la température et/ou la pression et/ou le débit et/ou la puissance.

9. Contrôleur selon la revendication 7 ou la revendication 8, où l'écran de changement d'unité (470) affiche une section de sélection d'unité par défaut (475) pour le réglage d'une unité par défaut.

10. Contrôleur selon l'une des revendications 1 à 9, où, si une unité d'informations reçues du climatiseur relié en communication est différente de celle réglée dans le contrôleur, l'unité des informations reçues est convertie en une unité de réglage, et le dispositif de sortie (210) affiche des informations converties suivant cette unité sur l'écran de gestion (400).
